# FASCICULE DE BREVET EUROPEEN

(11) **EP 2 268 497 B1**
(45) Date de publication et mention de la délivrance du brevet: **05.10.2011**
(21) Numéro de dépôt: 09742292.7
(22) Date de dépôt: 09.04.2009
(51) Int. Cl.: B60K 13/02, B60R 19/24, B62D 25/08

(54) **CAISSE DE VEHICULE AUTOMOBILE COMPORTANT UN SUPPORT D'UN ELEMENT FORMANT PARE-CHOC ET UN CONDUIT D'ADMISSION D'AIR AU MOTEUR**
AUTOMOBILKAROSSERIE MIT EINEM LAGER FÜR EIN STOSSFÄNGERFORMUNGSELEMENT UND EINEM LUFTEINLASSKANAL FÜR DEN MOTOR
AUTOMOBILE BODY INCLUDING A BEARING FOR A BUMPER-FORMING MEMBER AND AN AIR INTAKE DUCT TO THE ENGINE

(30) Priorité: 28.04.2008 FR 0802378
(43) Date de publication de la demande: 05.01.2011
(73) Titulaire: Renault S.A.S., 92100 Boulogne-Billancourt (FR)
(72) Inventeur: MASSOULIE, Juliette, F-78950 Gambais (FR); AUDOUX, Christophe, F-92400 Courbevoie (FR); BOGAERT, Philippe, F-78490 Les Mesruls (FR)
(86) Numéro de dépôt international: PCT/FR2009/050641
(87) Numéro de publication internationale: WO 2009/136094

(56) Documents cités:
- EP-A- 0 535 406
- EP-A- 1 847 446
- EP-B- 1 426 224
- FR-A- 2 906 191
- US-B2- 6 540 802

## Description

La présente invention se rapporte à une caisse de véhicule automobile.

Le moteur des véhicules automobiles est alimenté en air de combustion par un conduit d'amission d'air. Ce conduit est relié au moteur et comporte une extrémité ouverte à travers laquelle entre l'air extérieur. L'extrémité ouverte de ce conduit d'amission d'air est en général placée à l'avant du véhicule, au-dessus de la traverse avant de la caisse, derrière l'élément formant pare-choc qui protège la traverse.

EP 1847446 A décrit une caisse selon le préambule de la revendication 1.

Un des problèmes rencontrés est la présence d'eau dans l'air entrant.
Ainsi, certains conduits d'admission d'air comportent des dispositifs de séparation de l'air et de l'eau comme celui décrit dans le document US 6 540 802, par exemple.

Un autre problème qui se pose et l'entrée massive et directe de l'eau dans le conduit d'admission d'air, en cas de forte pluie, lors d'un passage à gué ou dans une trop grosse flaque d'eau. Dans ce cas, le dispositif de séparation n'est d'aucune efficacité et le moteur risque d'être noyé.

Aussi, un problème qui se pose et que vise à résoudre la présente invention, est de proposer une caisse de véhicule automobile qui comporte un conduit d'admission d'air au moteur et qui permet de protéger ce conduit des entrées directes d'eau.

Dans le but de résoudre ce problème, la présente invention propose une caisse de véhicule automobile présentant une extrémité avant et destinée à recevoir un élément formant pare-choc apte à protéger ladite extrémité avant, ladite caisse comportant :
- une traverse avant, disposée transversalement à ladite caisse, et définissant ladite extrémité avant ;
- une paire de supports dudit élément formant pare-choc, lesdits supports étant fixés distants l'un de l'autre, sur ladite traverse, et comportant chacun une partie de fixation qui s'étend devant ladite traverse et qui sert au support dudit élément formant pare-choc ; et
- un conduit d'admission d'air dans le moteur, ledit conduit comportant une extrémité ouverte par laquelle l'air extérieur entre dans ledit conduit.

Selon l'invention, un desdits supports dudit élément formant pare-choc comporte une portion de protection de ladite extrémité ouverte, ladite portion de protection est disposée dans le voisinage proche de ladite extrémité ouverte, ladite portion de protection recouvre ladite extrémité ouverte et s'étend le long d'une portion dudit conduit et un espace est ménagé entre ladite portion de protection et ledit conduit de manière à laisser pénétrer de l'air dans ledit conduit par ladite extrémité ouverte.

Par les termes « voisinage proche », on entend, au sens de la présente invention que la portion de protection est distante au maximum d'une distance de l'ordre de 150 mm de l'extrémité ouverte du conduit.

La disposition de l'extrémité ouverte du conduit et donc celle de la portion de protection ne sont pas limitatives de l'invention. Ainsi, l'extrémité ouverte peut être disposée face à l'avant du véhicule. En effet, l'extrémité ouverte étant proche du support de l'élément formant pare-choc (voire insérée dans une portion de ce dernier), elle est relativement éloignée des ouvertures ménagées dans l'élément formant pare-choc, lesquelles sont susceptibles de laisser entrer de l'eau. L'élément formant pare-choc représente donc un premier obstacle à l'eau, ce qui n'est pas le cas lorsque l'extrémité ouverte est disposée directement au niveau d'une ouverture de l'élément formant pare-choc, comme c'est le cas dans l'art antérieur.

Dans un mode de réalisation particulier, la traverse présente une face supérieure orientée vers l'habitacle d'un véhicule automobile et ladite extrémité ouverte est orientée vers ladite face supérieure. Cette position, sensiblement verticale de la portion de conduit comprenant l'extrémité ouverte, par rapport à la traverse et à la caisse, permet de bien éviter les entrées d'eau dans le conduit, à travers l'extrémité ouverte de ce dernier.

Selon un mode de réalisation particulier de la portion de protection, ledit conduit comporte une extrémité reliée au moteur, ladite portion de protection présente un fond qui est disposé au-dessus de ladite extrémité ouverte et une paroi formant bord qui est connectée audit fond et qui s'étend le long dudit conduit, au-delà de ladite extrémité ouverte, dans la direction de ladite extrémité reliée au moteur. L'invention n'est néanmoins pas limitée à ce mode de réalisation. En particulier, la distinction entre le fond et la ou les parois formant bord peut ne pas être distincte.

Selon un mode de réalisation particulier, la distance minimale H qui sépare ledit fond de ladite extrémité ouverte est supérieure à 0,8 fois le diamètre dudit conduit.

Selon un mode de réalisation qui peut être combiné au mode de réalisation précédent, la distance E séparant ladite paroi formant bord dudit conduit est supérieure à la moitié du diamètre dudit conduit.

La Demanderesse a mis en évidence que de telles valeurs permettaient, combinées ou non, d'éviter efficacement toute entrée d'eau directe et massive dans le conduit d'admission d'air.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 représente une vue partielle de face de la partie avant de la caisse selon l'invention ;
- la Figure 2 représente une vue schématique de côté d'un véhicule comportant la caisse selon l'invention ;
- la Figure 3 représente une vue en coupe selon un plan perpendiculaire au longeron et passant par l'axe III-III, de la portion de protection représentée sur la figure 1 ; et
- la Figure 4 représente une vue, partielle, de face, de la caisse selon l'invention, l'élément formant pare-choc étant monté sur le support.

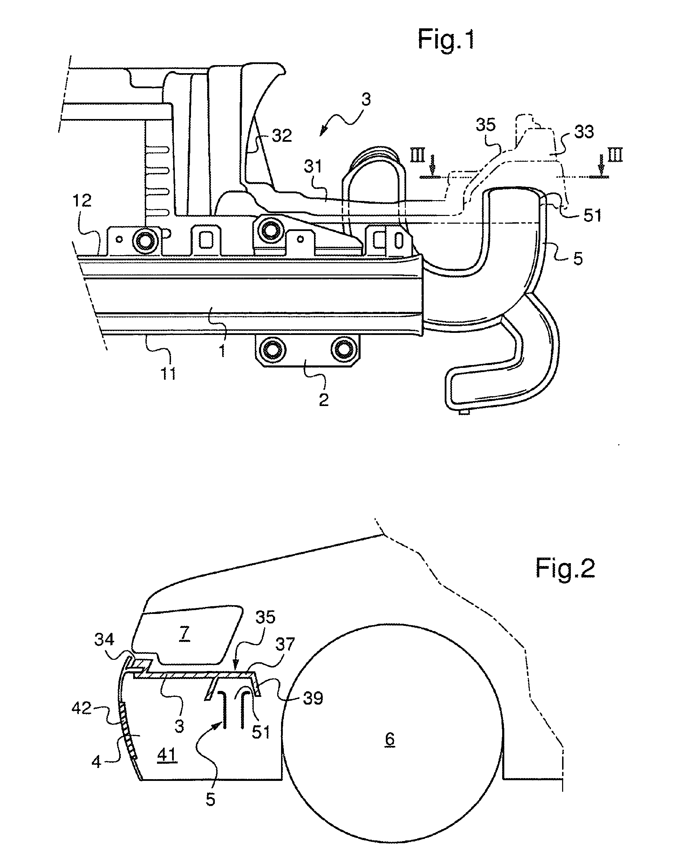

La Figure 1 représente une vue de face de la partie avant de la caisse de l'invention. La caisse selon l'invention comporte une traverse avant 1 qui s'étend transversalement à la caisse et définit l'extrémité avant de la caisse. La traverse avant 1 présente une face inférieure 11, destinée à être orientée vers le sol, lorsque la caisse est montée sur un véhicule automobile, et une face supérieure 12, opposée à la face inférieure 11 et destinée à être orientée vers le toit de l'habitacle de ce même véhicule. L'extrémité d'un longeron 2 est fixée à la traverse avant 1. Ce longeron 2 définit la longueur de la caisse.

La caisse 1 comporte également un support 3 d'un élément formant pare-choc. Ce support 3 est fixé sur la face supérieure 12 de la traverse 1 et comporte une portion longitudinale 31 qui s'étend parallèlement à la traverse avant 1 et deux portions latérales 32 et 33, qui sont disposées chacune à une extrémité de la portion longitudinale 31. La première portion latérale 32 est fixée à la traverse avant 1 et s'étend perpendiculairement à cette dernière et perpendiculairement au longeron 2 ; cette première portion latérale 32 dépasse au-dessus de la face supérieure 12 de la traverse 1. La seconde portion latérale 33 est disposée au-delà d'une extrémité de la traverse avant 1. Cette seconde portion latérale 33 prolonge longitudinalement la traverse 1 et sert au support des parois de côtés 41 de l'élément formant pare-choc 4 (voir figure 2). La seconde portion latérale 33 comporte une partie de fixation qui s'étend en avant de la traverse (dans la direction opposée au longeron 2) et qui sera décrite plus en détails en référence à la figure 2.

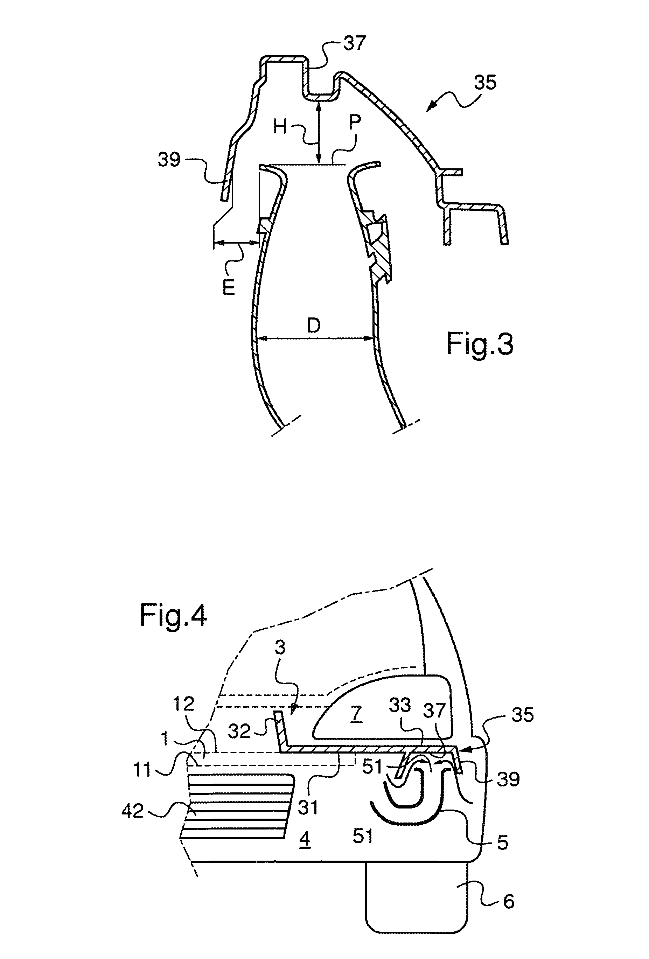

Comme représenté sur la figure 1, la caisse comporte également un conduit d'admission d'air au moteur 5. Ce conduit 5 comporte une extrémité ouverte 51 qui est insérée dans une portion de protection 35, ménagée dans le support 3, au niveau de la seconde extrémité latérale 33. Cette portion de protection 35 forme un chapeau au-dessus de l'extrémité ouverte 51 et sera plus amplement décrite en référence à la figure 3.

En référence à la figure 2, le support 3 comporte également une portion de fixation 34 qui s'étend selon une direction perpendiculaire à la traverse 1, en avant de cette dernière (c'est-à-dire dans la direction opposée au longeron 2). Cette portion de fixation 34 comporte des moyens formant pince qui viennent pincer la paroi de l'élément formant pare-choc 4 de manière à le maintenir suspendu devant la traverse 1. L'élément formant pare-choc 4 recouvre en effet la longueur de la traverse avant 1 et comporte des parois de côté 41 qui sont positionnées devant chacune des deux extrémités de la traverse 1. Ces parois de côté 41 s'étendent parallèlement aux longerons, à proximité des roues avant 6. Ces parois latérales 41 sont situées sous les projecteurs avant 7. L'élément formant pare-choc 4 comporte des ouvertures 42, formées dans sa paroi avant qui est parallèle à la traverse 1 (voir figure 4). Ces ouvertures 42 permettent l'entrée de l'air extérieur entre la caisse et l'élément formant pare-choc 4.

L'extrémité ouverte 51 du conduit d'air 5 est située dans la portion de protection 35 du support 3. Cette portion de protection 35 est située latéralement à la traverse 1, dans le prolongement de cette dernière, à proximité de la roue avant 6 du véhicule. La portion de protection 35 comporte un fond 37 et des bords 39 qui s'étendent le long d'une portion du conduit 5 de manière à bien recouvrir l'extrémité ouverte 51 du conduit. Le fond 37 est disposé au-dessus de l'extrémité ouverte 51 et est distant de cette dernière. De même, les bords 39 sont distants du conduit 5 de manière à laisser entrer l'air par l'extrémité ouverte 51 du conduit 5. Dans le mode de réalisation représenté, l'extrémité ouverte 51 est orientée vers le plancher du véhicule, c'est-à-dire vers la face supérieure 12 de la traverse 1 (voir figure 1), de manière à éviter les entrées directes d'eau. Cette disposition n'est néanmoins pas limitative de l'invention.

Comme représenté sur la figure 3, la portion de protection 35 comporte un fond 37 et deux bords 39. Dans le mode de réalisation représenté, la portion de protection 35 est sensiblement cylindrique. Le conduit 5 présente un diamètre maximal D. On définit par H la distance minimale séparant le fond 37 du plan P dans lequel est contenue l'extrémité ouverte 51. On définit par E la distance minimale séparant chacun des bords 39 du bord de l'extrémité ouverte 51. Les bords 39 s'étendent sur une portion du conduit 5, au-delà de l'extrémité ouverte 51 de manière à bien protéger cette dernière. La distance H est au moins égale à 0,8 fois le diamètre D du conduit. De préférence, H est sensiblement égale à D. La distance E est supérieure à 0,5 fois le diamètre D du conduit 5. Dans le cas présent, les bords 39 font partie d'une paroi de bord sensiblement cylindrique.

Comme représenté sur la figure 4, l'élément formant pare-choc 4 comporte deux ouvertures formant chicane 42 (une haute et une basse) qui permettent à l'air extérieur d'entrer dans l'élément formant pare-choc 4, entre ce dernier et la caisse du véhicule.

Le fonctionnement du dispositif de l'invention va maintenant être expliqué en référence à la figure 4.

L'air extérieur entre par les ouvertures 42 de l'élément formant pare-choc 4. Il arrive ainsi dans la zone creuse délimitée par l'élément formant pare-choc, devant la traverse avant 1. L'air circule librement dans cette zone creuse. Les bords 39 et le fond 37 de la portion de protection 35 étant suffisamment éloignés du conduit 5, l'air peut pénétrer dans le conduit 5 et alimenter ainsi le moteur du véhicule. Si de l'eau parvient à entrer dans l'élément formant pare-choc 4, cette eau ne peut pénétrer dans le conduit 5 du fait de la protection créée par la portion de protection 35. En effet, du fait des bords 39 qui entourent l'extrémité ouverte 51 du conduit 5 et qui se prolongent vers la seconde extrémité du conduit 5 qui est connectée au moteur, l'eau qui arrive sous forme de vague à proximité du support 3 ne peut pénétrer dans le conduit 5, entre ce dernier et les bords 39.

## Revendications

1. Caisse de véhicule automobile présentant une extrémité avant et destinée à recevoir un élément formant pare-choc (4) apte à protéger ladite extrémité avant, ladite caisse comportant :
- une traverse avant (1), disposée transversalement à ladite caisse, et définissant ladite extrémité avant ;
- une paire de supports (3) dudit élément formant pare-choc (4), lesdits supports (3) étant fixés distants l'un de l'autre, sur ladite traverse avant (1), et comportant chacun une partie de fixation (34) qui s'étend devant ladite traverse avant (1) et qui sert au support dudit élément formant pare-choc (4) ; et
- un conduit d'admission d'air (5) dans le moteur, ledit conduit (5) comportant une extrémité ouverte (51) par laquelle l'air extérieur entre dans ledit conduit (5) ; caisse dans laquelle un desdits supports (3) dudit élément formant pare-choc (4) comporte une portion de protection (35) de ladite extrémité ouverte (51), ladite portion de protection (35) est disposée dans le voisinage proche de ladite extrémité ouverte (51), ladite portion de protection (35) recouvrant ladite extrémité ouverte (51) et un espace est ménagé entre ladite portion de protection (35) et ledit conduit (5) de manière à laisser pénétrer de l'air dans ledit conduit (5) par ladite extrémité ouverte (51), **caractérisée en ce que** ladite portion de protection (35) s'etend le long d'une portion dudit conduit (5).

2. Caisse selon la revendication 1, **caractérisée en ce que** ladite traverse avant (1) présente une face supérieure (11), orientée vers l'habitacle d'un véhicule automobile, et **en ce que** ladite extrémité ouverte (51) est orientée vers ladite face supérieure (11).

3. Caisse selon la revendication 1 ou 2, **caractérisée en ce que** ledit conduit (5) comporte une extrémité reliée au moteur, **en ce que** ladite portion de protection (35) présente un fond (37) qui est disposé au-dessus de ladite extrémité ouverte (51) et une paroi formant bord (39) connectée audit fond (37) et **en ce que** ladite paroi formant bord (39) s'étend le long dudit conduit (5), au-delà de ladite extrémité ouverte (51) dans la direction de ladite extrémité reliée au moteur.

4. Caisse selon la revendication 3, **caractérisée en ce que** la distance minimale (H) qui sépare ledit fond (37) de ladite extrémité ouverte (51) est supérieure à 0,8 fois le diamètre (D) dudit conduit (5).

5. Caisse selon l'une quelconque des revendications 3 et 4, **caractérisée en ce que** la distance (E) séparant ladite paroi formant bord (39) dudit conduit (5) est supérieure à la moitié du diamètre (D) dudit conduit (5).

## Claims

1. Motor vehicle body having a front end and intended to accept a bumper-forming element (4) able to protect said front end, said body comprising:
- a front crossmember (1) arranged transversely to said body, and defining said front end;
- a pair of mounts (3) for said bumper-forming element (4), said mounts (3) being fixed some distance apart, on said front crossmember (1), and each comprising a mounting part (34) which extends in front of said front crossmember (1) and serves to support said bumper-forming element (4); and
- an engine air intake duct (5), said duct (5) comprising an open end (51) via which air from outside enters said duct (5);
in which body one of said mounts (3) for said bumper-forming element (4) comprises a protective portion (35) protecting said open end (51), said protective portion (35) is arranged in the immediate vicinity of said open end (51), said protective portion (35) covering said open end (51), and a space is left between said protective portion (35) and said duct (5) so as to allow air to enter said duct (5) via said open end (51), **characterized in that** said protective portion (35) extends along a portion of said duct (5).

2. Body according to Claim 1, **characterized in that** said front crossmember (1) has an upper face (11) facing toward the interior of a motor vehicle, and **in that** said open end (51) faces toward said upper face (11).

3. Body according to Claim 1 or 2, **characterized in that** said duct (5) has an end connected to the engine, **in that** said protective portion (35) has an end wall (37) positioned above said open end (51) and an edge-forming wall (39) connected to said end wall (37), and **in that** said edge-forming wall (39) extends along said duct (5), beyond said open end (51), in the direction of said end connected to the engine.

4. Body according to Claim 3, **characterized in that** the minimum distance (H) separating said end wall (37) from said open end (51) is greater than 0.8 times the diameter (D) of said duct (5).

5. Body according to either one of Claims 3 and 4, **characterized in that** the distance (E) separating said edge-forming wall (39) from said duct (5) is greater than half the diameter (D) of said duct (5).

## Patentansprüche

1. Kraftfahrzeugkarosserie, die ein vorderes Ende aufweist, das zur Aufnahme eines einen Stoßfänger bildenden Elements (4) bestimmt ist, das das vordere Ende schützen kann, wobei die Karosserie Folgendes umfasst:
- einen vorderen Querträger (1), der quer zu der Karosserie angeordnet ist und das vordere Ende definiert;
- ein Paar Stützen (3) für das den Stoßfänger bildende Element (4), die in einem Abstand voneinander an dem vorderen Querträger (1) befestigt sind und jeweils einen Befestigungsteil (34) aufweisen, der sich vor dem vorderen Querträger (1) erstreckt und als Stütze für das den Stoßfänger bildende Element (4) dient; und
- einen Kanal (5) zum Einlassen von Luft in den Motor, wobei der Kanal (5) ein offenes Ende (51) aufweist, durch das Außenluft in den Kanal (5) eintritt;
wobei bei der Karosserie eine der Stützen (3) für das den Stoßfänger bildende Element (4) einen Schutzabschnitt (35) für das offene Ende (51) aufweist, wobei der Schutzabschnitt (35) in unmittelbarer Nähe des offenen Endes (51) angeordnet ist, wobei der Schutzabschnitt (35) das offene Ende (51) bedeckt und ein Raum zwischen dem Schutzabschnitt (35) und dem Kanal (5) ausgebildet ist, damit Luft durch das offene Ende (51) in den Kanal (5) eintreten kann, **dadurch gekennzeichnet, dass** sich der Schutzabschnitt (35) entlang einem Abschnitt des Kanals (5) erstreckt.

2. Karosserie nach Anspruch 1, **dadurch gekennzeichnet, dass** der vordere Querträger (1) eine Oberseite (11) aufweist, die zu dem Innenraum eines Kraftfahrzeugs ausgerichtet ist, und dass das offene Ende (51) zu der Oberseite (11) ausgerichtet ist.

3. Karosserie nach Anspruch 1 oder 2, **dadurch gekennzeichnet, dass** der Kanal (5) ein mit dem Motor verbundenes Ende aufweist, dass der Schutzabschnitt (35) einen Boden (37), der über dem offenen Ende (51) angeordnet ist, und eine den mit dem Boden (37) verbundenen Rand (39) bildende Wand aufweist und dass sich die den Rand (39) bildende Wand entlang dem Kanal (5) über das offene Ende (51) hinaus in Richtung des mit dem Motor verbundenen Endes erstreckt.

4. Karosserie nach Anspruch 3, **dadurch gekennzeichnet, dass** der Mindestabstand (H), der den Boden (37) von dem offenen Ende (51) trennt, über dem 0,8-Fachen des Durchmessers (D) des Kanals (5) beträgt.

5. Karosserie nach einem der Ansprüche 3 und 4, **dadurch gekennzeichnet, dass** der die den Rand (39) bildende Wand von dem Kanal (5) trennende Abstand über die Hälfte des Durchmessers (D) des Kanals (5) beträgt.
